# EUROPÄISCHE PATENTSCHRIFT

(11) **EP 3 230 128 B1**
(45) Veröffentlichungstag und Bekanntmachung des Hinweises auf die Patenterteilung: **19.12.2018**
(21) Anmeldenummer: 15775245.2
(22) Anmeldetag: 08.10.2015
(51) Int. Cl.: B60R 11/04, B60S 1/56

(54) **KAMERAANORDNUNG EINES KRAFTFAHRZEUGES**
CAMERA ASSEMBLY OF A MOTOR VEHICLE
AGENCEMENT DE CAMERA D'UN VÉHICULE AUTOMOBILE

(30) Priorität: 09.12.2014 DE 102014118220
(43) Veröffentlichungstag der Anmeldung: 18.10.2017
(73) Patentinhaber: Huf Hülsbeck & Fürst GmbH & Co. KG, 42551 Velbert (DE)
(72) Erfinder: BUSS, Wolfgang, 42697 Solingen (DE)
(74) Vertreter: Zenz Patentanwälte Partnerschaft mbB
(86) Internationale Anmeldenummer: PCT/EP2015/073291
(87) Internationale Veröffentlichungsnummer: WO 2016/091422

(56) Entgegenhaltungen:
- EP-A2- 1 332 923
- DE-A1-102005 021 672
- DE-A1-102008 008 656
- US-A1- 2010 027 119
- US-A1- 2011 073 142
- US-A1- 2014 192 410

## Beschreibung

Die Erfindung richtet sich auf eine Kameraanordnung eines Kraftfahrzeuges mit einem am Kraftfahrzeug befestigbaren Träger, einer Kameraeinheit, die unbeweglich an dem Träger befestigt ist und die ein Objektiv aufweist, und einer an dem Träger gelagerten Reinigungseinheit, die mit einer ein Reinigungsfluid führenden Fluidleitung verbunden ist und die der Reinigung des Objektivs dient.

Der Einsatz von Kameraeinheiten zur Fahrzeugumfeld-Erfassung ist bekannt. Derartige Kameraeinheiten werden beispielsweise als Einpark- und/oder Rangierhilfeeinrichtungen für Kraftfahrzeuge verwendet, um insbesondere die mit dem konventionellen Spiegel nicht einsehbaren Bereiche zu erfassen. Als elektronische Einparkhilfe ist üblicherweise am Heck des Kraftfahrzeugs eine Kameraeinheit angeordnet, durch welche die Umgebung hinter dem Kraftfahrzeug erfasst wird bzw. gefilmt werden kann. Gewöhnlich schaltet sich eine solche Kameraeinheit beim Einlegen eines Rückwärtsganges ein und zeigt ihr Bild auf einem Display im Cockpit des Kraftfahrzeugs an. Dabei sind solche Kameraeinheiten üblicherweise außen am Kraftfahrzeug an einer Position angebracht, wo sie eine freie Sicht nach außen auf den zu erfassenden Bereich haben. Die Funktion solcher Kameraeinheiten ist allerdings nur dann zuverlässig gewährleistet, wenn die durch die Kameraeinheiten aufgenommenen Bilder qualitativ verwertbar sind. Die Qualität wird dabei vor allem durch Verunreinigungen des Objektivs der Kameraeinheit bestimmt und herabgesetzt.

Aus der DE 103 18 987 B3 ist eine Kameraanordnung bekannt, die zur Überwachung eines Raumes hinter einem Kraftfahrzeug dient, wobei zu diesem Zweck eine Kameraeinheit, d.h. eine Videokamera, am Heck des Kraftfahrzeugs eingebaut ist, deren Überwachungsbilder auf einem im Sichtfeld des Fahrers angeordneten Bildschirm sichtbar sind. Das Objektiv der Kameraeinheit ist bei diesen bekannten Kameraanordnungen im Wesentlichen innerhalb der Kontur des Hecks des Kraftfahrzeugs angeordnet und schräg nach hinten unten ausgerichtet. Um die Verschmutzungsgefahr für das Objektiv der Kameraeinheit zu reduzieren, ist das Heck des Kraftfahrzeugs mit einer Vertiefung versehen, deren obere, stufig abgesetzte Begrenzungswand eine Öffnung für die Kameraeinheit aufweist. Ferner ist die Kameraeinheit weitgehend verdeckt im oberen Bereich der Vertiefung angeordnet. Diese Anordnung hat jedoch den Nachteil, dass ein Zugang zur manuellen Reinigung des Objektivs der Kameraeinheit schwer fällt, sollte das Objektiv doch verschmutzen.

Eine Kameraanordnung der Eingangs bezeichneten Art ist zum Beispiel aus der US 2014/192410 A1 bekannt.

Ferner ist aus der DE 10 2005 021 672 A1 eine Vorrichtung zur Sichtbarmachung der Umgebung eines Kraftfahrzeugs bekannt, wobei die Vorrichtung eine Kamera zum Bereitstellen eines Abbilds der Umgebung aufweist und eine Abdeckeinrichtung zum Verdecken einer Objektivoberfläche der Kamera vorgesehen ist. Die Abdeckeinrichtung deckt die Objektivoberfläche automatisch auf, wenn die Kamera betätigt wird, und verschließt die Objektivoberfläche, wenn die Kamera abgeschaltet wird. Die Abdeckeinrichtung weist eine Wischeinrichtung auf, die sich beim Wechsel von der Verschlussstellung in die Öffnungsstellung der Abdeckeinrichtung über die Objektivoberfläche bewegt und diese reinigt.

Auch ist eine Kameraanordnung aus der DE 10 2010 005 311 A1 bekannt, bei der eine Kameraeinheit unbeweglich in einer Heckklappe eines Kraftfahrzeugs eingebaut ist. Bei dieser Kameraanordnung ist das Objektiv der Kameraeinheit innerhalb der Kontur des Hecks des Kraftfahrzeugs weitgehend verdeckt angeordnet und schräg nach hinten unten gerichtet. Zur Vermeidung einer manuellen Reinigung des Objektivs ist unterhalb des Objektivs der Kameraeinheit eine Reinigungseinheit angeordnet, deren Düse auf das Objektiv der Kameraeinheit gerichtet ist. Nachteilig bei diesem Stand der Technik ist, dass beim Reinigungsvorgang das Reinigungsfluid unkontrolliert von dem Objektiv abprallen und in die Umgebung befördert werden kann, wodurch beispielsweise Personen im näheren Umfeld des Hecks des Kraftfahrzeugs versehentlich mit Reinigungsfluid besprüht werden.

Der Erfindung liegt die Aufgabe zugrunde eine Lösung zu schaffen, die auf konstruktiv einfache Weise und kostengünstig eine Kameraanordnung bereitstellt, die einen erhöhten Komfort bietet und die die Nachteile des Standes der Technik überwindet.

Bei einer Kameraanordnung der Eingangs bezeichneten Art wird die Aufgabe erfindungsgemäß dadurch gelöst, dass ein Klappenelement vorgesehen ist, welches in eine Reinigungsposition und in eine Ruheposition bewegbar ausgebildet ist, wobei das Klappenelement in der Ruheposition in einer Aufnahmekammer des Trägers eingefahren angeordnet ist und in der Reinigungsposition das Objektiv der Kameraeinheit überdeckend aus der Aufnahmekammer ausgefahren angeordnet ist.

Vorteilhafte und zweckmäßige Ausgestaltungen und Weiterbildungen der Erfindung ergeben sich aus den Unteransprüchen.

Durch die Erfindung wird eine Kameraanordnung zur Verfügung gestellt, die sich durch eine funktionsgerechte Konstruktion auszeichnet und einen einfachen und kostengünstigen Aufbau aufweist. Dadurch, dass das Klappenelement in der Reinigungsposition das Objektiv der Kameraeinheit überdeckt, ist insbesondere das äußere Umfeld der Kameraeinheit vor dem Reinigungsvorgang des Objektivs abgeschirmt, so dass nicht die Gefahr besteht, dass Personen im Umfeld mit Reinigungsfluid besprüht werden. Denn von dem Objektiv abprallendes Reinigungsfluid wird von dem Klappenelement abgefangen und gelangt dadurch nicht in die äußere Umgebung der Kameraeinheit bzw. Kameraanordnung, sondern tropft beispielsweise von dem Klappenelement nach unten hin ab.

In Ausgestaltung der erfindungsgemäßen Kameraanordnung ist vorgesehen, dass die Reinigungseinheit in Bezug auf das Objektiv der Kameraeinheit relativ bewegbar ausgebildet ist. Zur Reinigung des Objektivs ist es günstig, wenn die Reinigungseinheit direkt vor dem Objektiv angeordnet werden kann. Jedoch kann diese Anordnung nicht beibehalten werden, weil dann die Reinigungseinheit die Sicht der Kameraeinheit verdecken würde und dadurch die Fahrzeugumfeld-Erfassung bzw. die Erfassung des Raumes, auf welchen die Kamera gerichtet ist, scheitern würde. Daher ist es vorteilhaft, wenn die Reinigungseinheit relativ zu dem Objektiv bewegbar ist, so dass zur Reinigung die Reinigungseinheit vor dem Objektiv angeordnet wird und nach erfolgter Reinigung sich die Reinigungseinheit wieder aus dem Sicht- bzw. Aufnahmebereich der Kameraeinheit heraus bewegt.

Eine besonders günstige und konstruktiv effiziente Möglichkeit, damit die Reinigungseinheit nur während des eigentlichen Reinigungsvorgangs vor dem Objektiv angeordnet ist, besteht in weiterer Ausgestaltung der Kameraanordnung darin, dass die Reinigungseinheit mit dem Klappenelement bewegungsgekoppelt verbunden ist. Wenn ein Reinigungsvorgang erfolgen soll, wird das Klappenelement vor das Objektiv bewegt, um zu verhindern, dass vom Objektiv abprallendes Reinigungsfluid unkontrolliert in die Umgebung des Kraftfahrzeugs versprüht wird. Gleichzeitig mit der Anordnung des Klappenelements in dessen Reinigungsposition wird die Reinigungseinheit vor dem Objektiv angeordnet, was durch die Bewegungskopplung möglich ist, denn sowohl das Klappenelement als auch die Reinigungseinheit müssen beim Reinigungsvorgang vor dem Objektiv angeordnet sein. Wenn der eigentliche Reinigungsvorgang beendet ist, wird die Reinigungseinheit infolge der Bewegungskopplung bei einer Bewegung des Klappenelements in seine Ruheposition mitbewegt und gelangt dabei aus dem Sicht- bzw. Aufnahmebereich der Kameraeinheit. Die Reinigungseinheit und das Klappenelement sind folglich bewegungstechnisch miteinander gekoppelt.

Die Erfindung sieht in weiterer Ausgestaltung vor, dass zur Reinigung des Objektivs der Kameraeinheit die Reinigungseinheit sich gemeinsam mit dem Klappenelement in die das Objektiv überdeckende Reinigungsposition bewegend ausgebildet ist.

Von besonderem Vorteil ist es dann, wenn in weiterer Ausgestaltung der erfindungsgemäßen Kameraanordnung die Reinigungseinheit auf der dem Objektiv zugewandten Seitenfläche des Klappenelements angebracht ist. Durch diese konstruktive Ausgestaltung ist sichergestellt, dass sich die Reinigungseinheit mit dem Klappenelement mitbewegt und entsprechend entweder in einer Reinigungsstellung oder aber in einer außerhalb des Blickwinkels der Kameraeinheit liegenden Stellung angeordnet ist.

In weiterer Ausgestaltung der Kameraanordnung sieht die Erfindung vor, dass die Reinigungseinheit und das Klappenelement als einteiliges und gemeinsam bewegbares Bauteil ausgebildet sind. Auch diese konstruktive Ausgestaltung stellt sicher, dass sich die Reinigungseinheit mit dem Klappenelement mitbewegt, wodurch die Reinigungseinheit entweder in einer Reinigungsstellung oder aber in einer außerhalb des Blickwinkels der Kameraeinheit liegenden Stellung angeordnet ist.

Zur Erhöhung der Reinigungswirkung ist es von Vorteil, wenn das Reinigungsfluid mit hoher Geschwindigkeit oder mit hohem Druck auf das Objektiv auftrifft, um auch die hartnäckigste Verschmutzung zu entfernen. Zu diesem Zweck sieht die Erfindung in weiterer Ausgestaltung vor, dass die Reinigungseinheit wenigstens eine das Objektiv mit einem Reinigungsfluid beaufschlagende Düse aufweist.

Hinsichtlich einer effektiven Reinigung ist es dann weiter vorteilhaft, wenn zur Reinigung des Objektivs der Kameraeinheit die wenigstens eine Düse der Reinigungseinheit das Reinigungsfluid vorzugsweise mit Überdruck auf das Objektiv der Kameraeinheit sprüht. Auch durch diese Maßnahme kann die Reinigungswirkung der Reinigungseinheit erhöht werden.

Damit das Klappenelement in die Ruheposition und in die Reinigungsposition und insbesondere auch die mit dem Klappenelement bewegungsgekoppelte Reinigungseinheit bewegt werden können, sieht die Erfindung in Ausgestaltung der Kameraanordnung vor, dass das Klappenelement mit einer Antriebseinheit antriebsverbunden ist, durch welche das Klappenelement in die Reinigungsposition und in die Ruheposition bewegbar ist. Hierbei kann es sich um einen klein dimensionierten Aktuator, also einen Stellantrieb, handeln der von einer fahrzeugseitigen Steuereinheit zur Verstellung des Klappenelements angesteuert wird.

Von besonderem Vorteil ist es in Ausgestaltung der Erfindung, wenn die Fluidleitung über das Klappenelement zur Reinigungseinheit verlaufend geführt ist und mit dem Klappenelement in dessen Ruheposition und Reinigungsposition mitbewegbar ausgebildet ist.

Schließlich sieht die Erfindung in Ausgestaltung der Kameraanordnung vor, dass eine ein zur Trocknung des Objektivs dienendes Trocknungsfluid führende Fluidzuführleitung mit der Reinigungseinheit oder dem Klappenelement oder der Aufnahmekammer verbunden ist. In dem Fall, dass die Reinigungsvorrichtung als Reinigungsfluid eine Flüssigkeit verwendet, kann das Trocknungsfluid, welches gasförmig und vorzugsweise Luft ist, zur schnellen Trocknung des Objektivs verwendet werden, damit beispielsweise keine Tropfen des Reinigungsfluids das von der Kameraeinheit gelieferte Bild beeinträchtigen. Das Trocknungsfluid kann beispielsweise zu einer Düse oder Sprühvorrichtung befördert werden, die an der Reinigungsvorrichtung oder an dem Klappenelement oder an der Aufnahmekammer angebracht ist und die auf das Objektiv der Kameraeinheit ausgerichtet ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 ein schematisch dargestelltes Kraftfahrzeug mit einer exemplarisch angedeuteten erfindungsgemäßen Kameraanordnung,
Figur 2 eine perspektivische Ansicht der erfindungsgemäßen Kameraanordnung, bei der ein Klappenelement in einer Ruheposition angeordnet ist,
Figur 3 eine perspektivische Ansicht der erfindungsgemäßen Kameraanordnung, bei der das Klappenelement in einer Reinigungsposition angeordnet ist,
Figur 4 eine Einzelteildarstellung der erfindungsgemäßen Kameraanordnung in Perspektivansicht,
Figur 5 das Klappenelement und eine daran befestigte Reinigungseinheit in Perspektivansicht,
Figur 6 eine Perspektivansicht des Klappenelements und die Reinigungseinheit und
Figur 7 eine andere Perspektivansicht des Klappenelements und der Reinigungseinheit.

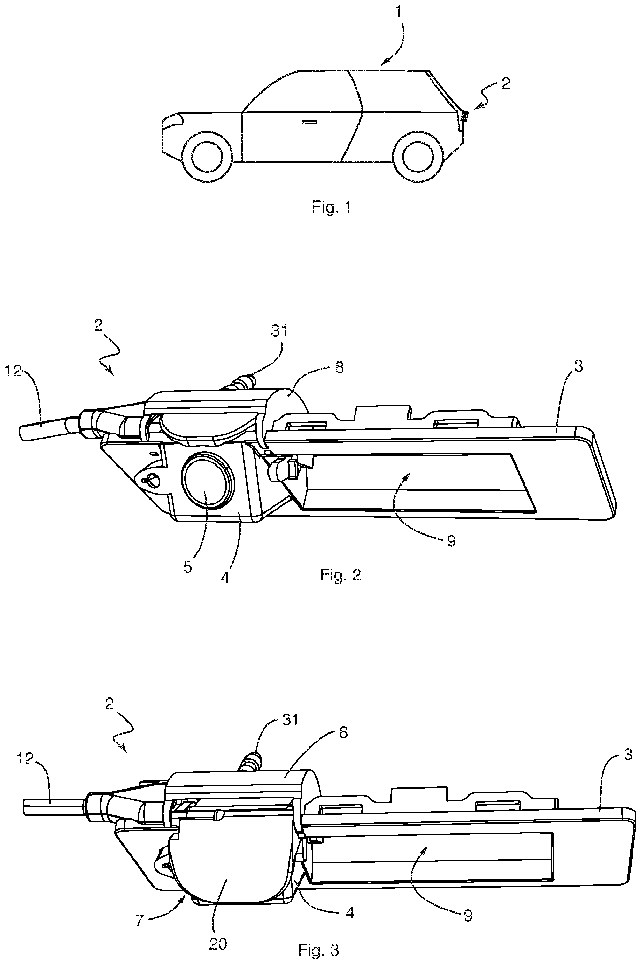

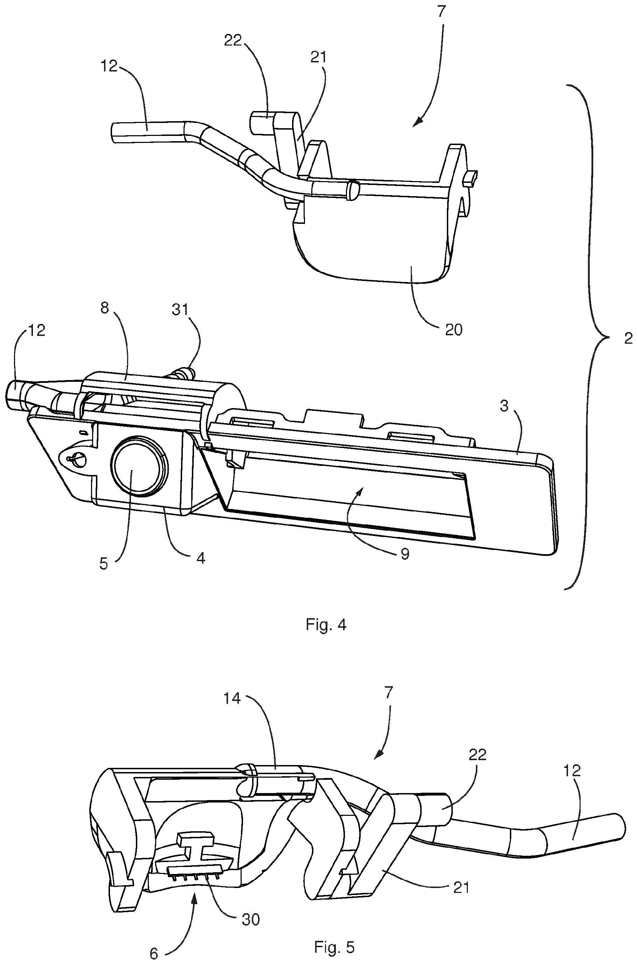

In Figur 1 ist schematisch ein Kraftfahrzeug 1 dargestellt, an dessen Heck eine Kameraanordnung 2 angebracht ist, die als Einpark- und/oder Rangierhilfeeinrichtung dient und den Raum hinter dem Kraftfahrzeug 1 überwacht. Die erfindungsgemäße Kameraanordnung 2 ist im Detail in den Figuren 2, 3 und 4 gezeigt und umfasst einen Träger 3, eine Kameraeinheit 4 mit einem Objektiv 5, eine Reinigungseinheit 6 und ein Klappenelement 7, wobei die Reinigungseinheit 6 und das Klappenelement 7 insbesondere aus den Figuren 5, 6 und 7 ersichtlich sind. Die erfindungsgemäße Kameraanordnung 2 ist aber nicht nur bei einem Kraftfahrzeug 1 sondern auch bei einem Nutzfahrzeug verwendbar.

Der in den Figuren 2, 3 und 4 gezeigte Träger 3 ist am Heck des Kraftfahrzeugs 1 befestigt, so dass es sich bei dem beschriebenen Ausführungsbeispiel um eine als Rückfahrkamera ausgebildete Kameraeinheit 4 handelt, die unbeweglich und nach unten geneigt am Träger 3 befestigt ist. Der Träger 3 ist mit einer Aufnahmekammer 8 ausgebildet, die zum einen die Kameraeinheit 4 derart aufnimmt, dass im Wesentlichen nur das Objektiv 5 nach außen hervorsteht. Zum anderen ist das Klappenelement 7 in seiner Ruheposition, die in Figur 2 gezeigt ist, in die Aufnahmekammer 8 eingefahren, so dass das Objektiv 5 freie Sicht auf den rückwärtigen, zu überwachenden Bereich hat. In der Ruheposition ist das Klappenelement 7 von außen so gut wie gar nicht sichtbar, was die äußere Erscheinungsform der Kameraanordnung 2 erhöht und der Kameraanordnung 2 eine gesteigerte Wertigkeit verleiht. Das Klappenelement 7 weist eine Klappe 20 auf, die dazu dient, das Objektiv 5 abzudecken, wenn das Objektiv 5 gereinigt wird. Durch die Reinigung, die mit Hilfe der zwischen der Klappe 20 und dem Objektiv 5 angeordneten Reinigungseinheit 6 hinter der Klappe 20 durchgeführt wird, soll verhindert werden, dass Reinigungsfluid unkontrolliert in das Umfeld des Kraftfahrzeugs 1 zum Beispiel auf vorbeilaufende Personen versprüht wird. Die Klappe 20 weist seitlich einen Schwenkarm 21 auf, an dessen freiem Ende ein Achszapfen 22 angeformt ist, welcher mit einem entsprechend in der Aufnahmekammer 8 ausgebildeten Lagerelement zusammenwirkt, so dass die Klappe 20 bei einer Bewegung in die Ruheposition und in die Reinigungsposition entsprechend um den Achszapfen 22 verschwenkt wird. Der Träger 3 weist ferner in dem dargestellten Ausführungsbeispiel eine Durchgangsöffnung 9 für ein in den Figuren nicht gezeigtes Türgriffmodul auf, welches an dem Träger 3 anbringbar ist oder zumindest hinter dem Träger 3 an der Karosserie des Kraftfahrzeugs 1 befestigbar ist.

Die Reinigungsposition des Klappenelements 7 ist in Figur 3 gezeigt. In der Reinigungsposition ist das Klappenelement 7 vor dem Objektiv 5 angeordnet. Die Reinigungseinheit 6, welche zur Reinigung des Objektivs 5 dient, ist über das Klappenelement 7 an dem Träger 3 gelagert. Denn die Reinigungseinheit 6 ist an dem Klappenelement 7 befestigt. Genauer gesagt ist die Reinigungseinheit 6 auf der Seitenfläche 10 des Klappenelements 7 angebracht, die dem Objektiv 5 zugewandt ist, wie zum Beispiel aus den Figuren 5, 6 oder 7 ersichtlich ist. Daher sind die Reinigungseinheit 6 und das Klappenelement 7 als einteiliges Bauteil 11 ausgebildet. Dadurch ist die Reinigungseinheit 6 gemeinsam mit dem Klappenelement 7 bewegbar ausgebildet. Insbesondere ist die Reinigungseinheit 6 in Bezug auf das Objektiv 5 der Kameraeinheit 4 relativ bewegbar ausgebildet, was dadurch bedingt ist, dass die Reinigungseinheit 6 mit dem Klappenelement 7 bewegungsgekoppelt verbunden ist. Folglich ist die Reinigungseinheit derart ausgebildet, dass sie sich zur Reinigung des Objektivs 5 der Kameraeinheit 4 gemeinsam mit dem Klappenelement 7 in die das Objektiv 5 überdeckende Reinigungsposition bewegt.

Die der Reinigung des Objektivs 5 dienende Reinigungseinheit 6 ist mit einer Fluidleitung 12 verbunden. Über die Fluidleitung 12 wird der Reinigungseinheit 6 ein Reinigungsfluid zugeführt, wobei das Reinigungsfluid entweder eine Flüssigkeit oder Luft sein kann, um die Oberfläche des Objektivs 5 zu reinigen. Die Fluidleitung 12, die schlauchförmig und flexibel ausgebildet ist, verläuft außen am Träger 3 und gelangt durch eine Durchtrittsöffnung in die Aufnahmekammer 8, in welcher das Klappenelement 7 schwenkbar gelagert ist. Mit anderen Worten ist die Fluidleitung 12 über das Klappenelement 7 zur Reinigungseinheit 6 verlaufend geführt, wobei die Reinigungseinheit mit dem Klappenelement 7 in dessen Ruheposition und Reinigungsposition mitbewegbar ausgebildet ist. Die Fluidleitung 12 ist über ein an der Reinigungseinheit 6 ausgebildetes Anschlussstück 14 an die Reinigungseinheit 6 angeschlossen und kann diese mit Reinigungsfluid versorgen.

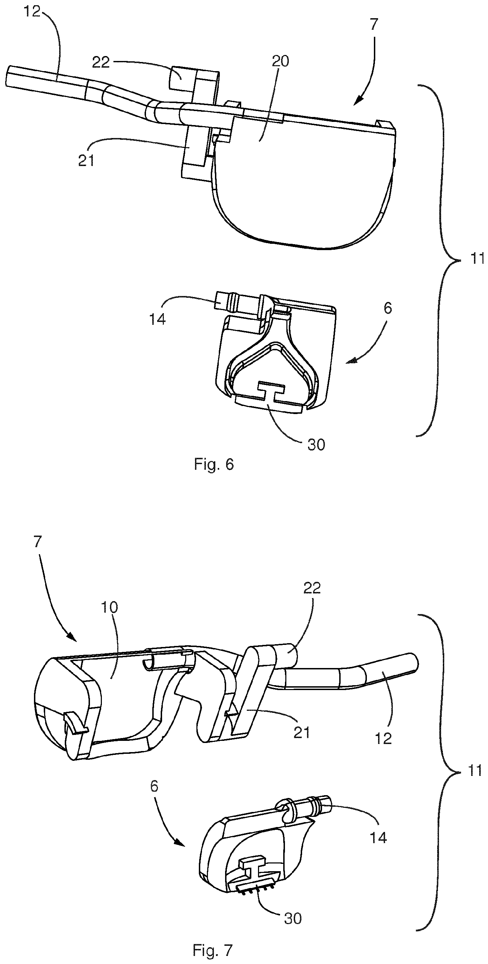

Wie beispielsweise in den Figuren 5 und 7 gezeigt ist, weist in dem dargestellten Ausführungsbeispiel der Kameraanordnung 2 die Reinigungseinheit 6 mehrere Düsen 30 auf, die nebeneinanderliegend angeordnet sind und durch ein nicht näher gezeigtes, in der Reinigungseinheit 6 ausgebildetes Kanalsystem mit Reinigungsfluid versorgt werden, um das Objektiv 5 mit dem Reinigungsfluid zu beaufschlagen und zu reinigen. Um die Reinigungswirkung zu erhöhen, wird das Reinigungsfluid mit hohem Druck zur Reinigungseinheit 6 gefördert, wobei die Düsen 30 zusätzlich dafür sorgen, dass zur Reinigung des Objektivs 5 der Kameraeinheit 4 das Reinigungsfluid mit Überdruck auf das Objektiv 5 gesprüht wird.

Sofern es sich bei dem Reinigungsfluid um eine Flüssigkeit handelt, kann die Oberfläche des Objektivs 5 aktiv getrocknet werden. Zu diesem Zweck sieht die Erfindung eine Fluidzuführleitung 31 vor, durch die ein Trocknungsfluid, d.h. Luft, zu der Aufnahmekammer 8 geführt werden kann. Die Aufnahmekammer 8 ist im Bereich der Fluidzuführleitung 31 in Richtung des Objektivs 5 gewölbt, um das Trocknungsfluid entsprechend auf die Oberfläche des Objektivs 5 zu leiten und zu lenken.

Als Alternative zu einer Zuführung zur Aufnahmekammer 8 kann das Trocknungsfluid auch zu dem Klappenelement 7 oder zu der Reinigungseinheit 6 befördert werden, die dann durch spezielle Ausgestaltungen das Trocknungsfluid auf die Oberfläche des Objektivs 5 leiten. Beispielsweise können die Düsen der Reinigungseinheit 6 mit einem Umschaltventil ausgestattet sein, so dass die Düsen 30 zuerst mit dem Reinigungsfluid und nach der Reinigung mit dem Trocknungsfluid beaufschlagt werden.

Schließlich kann an der Reinigungseinheit 6 im Bereich unterhalb der Düsen 30 eine gummielastische Abziehkante nach Art einer Wischlippe angebracht sein, die sich bei einer Bewegung des Klappenelements 7 aus der Reinigungsposition in die Ruheposition über die Oberfläche des Objektivs 5 bewegt und dabei Rückstände des Reinigungsfluides von dem Objektiv 5 weg wischt.

Abschließend sei angemerkt, dass das Klappenelement 7 mit einer in den Figuren nicht gezeigten Antriebseinheit antriebsverbunden ist. Die Antriebseinheit sorgt dafür, dass das Klappenelement 7 mit einer in die Reinigungsposition, in welcher das Klappenelement 7 das Objektiv 5 der Kameraeinheit 4 überdeckend aus der Aufnahmekammer 8 ausgefahren angeordnet ist, und in die Ruheposition, in welcher das Klappenelement 7 in der Aufnahmekammer 8 des Trägers 3 eingefahren angeordnet ist, bewegt werden kann.

Die vorstehend beschriebene Erfindung ist selbstverständlich nicht auf die beschriebene und dargestellte Ausführungsform beschränkt. Beispielsweise kann die Reinigung des Objektivs 5 nicht nur in der Reinigungsposition des Klappenelements 7 durchgeführt werden. Die Reinigung kann vielmehr schon bereits während der Bewegung des Klappenelements aus der Ruheposition in die Reinigungsposition begonnen werden, wobei es auch denkbar ist, dass die Reinigung nur während der Bewegung des Klappenelements 6 durchgeführt wird.

## Patentansprüche

1. Kameraanordnung (2) eines Kraftfahrzeuges (1) mit
einem am Kraftfahrzeug (1) befestigbaren Träger (3),
einer Kameraeinheit (4), die unbeweglich an dem Träger (3) befestigt ist und die ein Objektiv (5) aufweist, und
einer an dem Träger (3) gelagerten Reinigungseinheit (6), die mit einer ein Reinigungsfluid führenden Fluidleitung (12) verbunden ist und die der Reinigung des Objektivs (5) dient, wobei ein in einer Aufnahmekammer (8) des Trägers (3) gelagertes Klappenelement (7) vorgesehen ist, welches in eine Reinigungsposition und in eine Ruheposition bewegbar ausgebildet ist, wobei das Klappenelement (7) in der Ruheposition in der Aufnahmekammer (8) eingefahren angeordnet ist und in der Reinigungsposition das Objektiv (5) der Kameraeinheit (4) überdeckend aus der Aufnahmekammer (8) ausgefahren angeordnet ist.

2. Kameraanordnung (2) nach Anspruch 1, **dadurch gekennzeichnet, dass** die Reinigungseinheit (6) in Bezug auf das Objektiv (5) der Kameraeinheit (4) relativ bewegbar ausgebildet ist.

3. Kameraanordnung (2) nach Anspruch 1 oder 2, **dadurch gekennzeichnet, dass** die Reinigungseinheit (6) mit dem Klappenelement (7) bewegungsgekoppelt verbunden ist.

4. Kameraanordnung (2) nach einem der vorhergehenden Ansprüche, **dadurch gekennzeichnet, dass** zur Reinigung des Objektivs (5) der Kameraeinheit (4) die Reinigungseinheit (6) sich gemeinsam mit dem Klappenelement (7) in die das Objektiv (5) überdeckende Reinigungsposition bewegend ausgebildet ist.

5. Kameraanordnung (2) nach einem der vorhergehenden Ansprüche, **dadurch gekennzeichnet, dass** die Reinigungseinheit (6) auf der dem Objektiv (5) zugewandten Seitenfläche (10) des Klappenelements (7) angebracht ist.

6. Kameraanordnung (2) nach einem der vorhergehenden Ansprüche, **dadurch gekennzeichnet, dass** die Reinigungseinheit (6) und das Klappenelement (7) als einteiliges und gemeinsam bewegbares Bauteil (11) ausgebildet sind.

7. Kameraanordnung (2) nach einem der vorhergehenden Ansprüche, **dadurch gekennzeichnet, dass** die Reinigungseinheit (6) wenigstens eine das Objektiv (5) mit einem Reinigungsfluid beaufschlagende Düse (30) aufweist.

8. Kameraanordnung (2) nach Anspruch 7, **dadurch gekennzeichnet, dass** zur Reinigung des Objektivs (5) der Kameraeinheit (4) die wenigstens eine Düse (30) der Reinigungseinheit (6) das Reinigungsfluid vorzugsweise mit Überdruck auf das Objektiv (5) der Kameraeinheit (4) sprüht.

9. Kameraanordnung (2) nach einem der vorhergehenden Ansprüche, **dadurch gekennzeichnet, dass** die Fluidleitung (12) über das Klappenelement (7) zur Reinigungseinheit (6) verlaufend geführt ist und mit dem Klappenelement (7) in dessen Ruheposition und Reinigungsposition mitbewegbar ausgebildet ist.

10. Kameraanordnung (2) nach einem der vorhergehenden Ansprüche, **dadurch gekennzeichnet, dass** eine ein zur Trocknung des Objektivs (5) dienendes Trocknungsfluid führende Fluidzuführleitung (31) mit der Reinigungseinheit (6) oder dem Klappenelement (7) oder der Aufnahmekammer (8) verbunden ist.

## Claims

1. A camera assembly (2) of a motor vehicle (1), comprising a carrier (3) which can be fastened to the motor vehicle (1), a camera unit (4), which is immovably fastened to the carrier (3) and which comprises a lens (5), and a cleaning unit (6), which is mounted on the carrier (3) and which is connected to a fluid line (12) which conducts a cleaning fluid and which is used to clean the lens (5), wherein a flap element (7) is provided, which is mounted in an accommodating chamber (8) of the carrier (3) and which is constituted so as to be movable into a cleaning position and into a rest position, wherein the flap element (7) is arranged so as to be retracted in the accommodating chamber (8) in the rest position and is arranged so as to be extended out of the accommodating chamber (8) in such a way as to cover the lens (5) of the camera unit (4) in the cleaning position.

2. The camera assembly (2) according to claim 1, **characterised in that** the cleaning unit (6) is constituted movable relative to the lens (5) of the camera unit (4).

3. The camera assembly (2) according to claim 1 or 2, **characterised in that** the cleaning unit (6) is movably connected to the flap element (7).

4. The camera assembly (2) according to any one of the preceding claims, **characterised in that**, for the cleaning of the lens (5) of the camera unit (4), the cleaning unit (6) is constituted so as to move jointly with the flap element (7) into the cleaning position covering the lens (5).

5. The camera assembly (2) according to any one of the preceding claims, **characterised in that** the cleaning unit (6) is fitted on the lateral surface (10) of the flap element (7) facing the lens (5).

6. The camera assembly (2) according to any one of the preceding claims, **characterised in that** the cleaning unit (6) and the flap element (7) are constituted as a one-piece and jointly movable component (11).

7. The camera assembly (2) according to any one of the preceding claims, **characterised in that** the cleaning unit (6) comprises at least one nozzle (30) applying a cleaning fluid to the lens (5).

8. The camera assembly (2) according to claim 7, **characterised in that**, for the cleaning of the lens (5) of the camera unit (4), the at least one nozzle (30) of the cleaning unit (6) sprays the cleaning fluid preferably with an excess pressure onto the lens (5) of the camera unit (4).

9. The camera assembly (2) according to any one of the preceding claims, **characterised in that** the fluid line (12) is conducted running via the flap element (7) to the cleaning unit (6) and is constituted so as to be jointly movable with the flap element (7) into its rest position and cleaning position.

10. The camera assembly (2) according to any one of the preceding claims, **characterised in that** a fluid supply line (31) conducting a drying fluid used to dry the lens (5) is connected to the cleaning unit (6) or the flap element (7) or the accommodating chamber (8).

## Revendications

1. Agencement de caméra (2) d'un véhicule automobile (1), pourvu d'un support (3), susceptible d'être fixé sur le véhicule automobile (1), d'un module de caméra (4) qui est fixé de manière immobile sur le support (3) et qui comporte un objectif (5) et d'un module de nettoyage (6), logé sur le support (3) qui est relié avec un conduit à fluide (12) conduisant un fluide de nettoyage et servant à nettoyer l'objectif (5), un élément à clapet (7) logé dans un compartiment de logement (8) du support (3), lequel est conçu en étant mobile dans une position de nettoyage et dans une position de repos étant prévu, dans la position de repos, l'élément à clapet (7) étant placé en étant rentré dans le compartiment de logement (8) et dans la position de nettoyage, l'objectif (5) du module de caméra (4) étant placé en recouvrement en étant sorti du compartiment de logement (8).

2. Agencement de caméra (2) selon la revendication 1, **caractérisé en ce que** le module de nettoyage (6) est conçu en étant mobile de manière relative par rapport à l'objectif (5) du module de caméra (4).

3. Agencement de caméra (2) selon la revendication 1 ou 2, **caractérisé en ce que** le module de nettoyage (6) est relié de manière couplée en mouvements avec l'élément à clapet (7).

4. Agencement de caméra (2) selon l'une quelconque des revendications précédentes, **caractérisé en ce que** pour le nettoyage de l'objectif (5) du module de caméra (4), le module de nettoyage (6) est conçu en étant mobile en commun avec l'élément à clapet (7) dans la position de nettoyage, recouvrant l'objectif (5).

5. Agencement de caméra (2) selon l'une quelconque des revendications précédentes, **caractérisé en ce que** le module de nettoyage (6) est monté sur la surface latérale (10) de l'élément à clapet (7) qui fait face à l'objectif (5).

6. Agencement de caméra (2) selon l'une quelconque des revendications précédentes, **caractérisé en ce que** le module de nettoyage (6) et l'élément à clapet (7) sont conçus sous la forme d'un élément constitutif (11) en monobloc et mobile en commun.

7. Agencement de caméra (2) selon l'une quelconque des revendications précédentes, **caractérisé en ce que** le module de nettoyage (6) comporte au moins une buse (30) exposant l'objectif (5) à un fluide de nettoyage.

8. Agencement de caméra (2) selon la revendication 7, **caractérisé en ce que** pour le nettoyage de l'objectif (5) du module de caméra (4), l'au moins une buse (30) du module de nettoyage (6) vaporise le fluide de nettoyage, de préférence avec une surpression sur l'objectif (5) du module de caméra (4).

9. Agencement de caméra (2) selon l'une quelconque des revendications précédentes, **caractérisé en ce que** le conduit à fluide (12) est guidé en s'écoulant via l'élément à clapet (7) vers le module de nettoyage (6) et est conçu en étant co-déplaçable avec l'élément à clapet (7) dans la position de repos et dans la position de nettoyage de ce dernier.

10. Agencement de caméra (2) selon l'une quelconque des revendications précédentes, **caractérisé en ce qu'**un conduit d'alimentation de fluide (31) conduisant un fluide de séchage servant à sécher l'objectif (5) est relié avec le module de nettoyage (6) ou avec l'élément à clapet (7) ou avec le compartiment de logement (8).
